Europäisches Patentamt

European Patent Office

Office européen des brevets

(11) Publication number: 0 484 780 A1

# EUROPEAN PATENT APPLICATION

(21) Application number: 91118340.8

(22) Date of filing: 28.10.91

(51) Int. Cl.5: G11B 5/596, G11B 21/08,
G11B 7/13, G11B 5/55,
G11B 21/10

(30) Priority: 09.11.90 US 611031

(43) Date of publication of application:
13.05.92 Bulletin 92/20

(84) Designated Contracting States:
BE DE FR GB IT LU NL

(71) Applicant: INSITE PERIPHERALS, INC.
4433 Fortran Drive
San Jose, CA. 95134-2302(US)

(72) Inventor: Rose, Andrew M.
2501 Mardell Way
Mountain View, CA 94043(US)
Inventor: Strysko, Mark E.
4405 Tilbury Drive
San Jose, CA 95130(US)

(74) Representative: Blumbach Weser Bergen
Kramer Zwirner Hoffmann Patentanwälte
Sonnenberger Strasse 100
W-6200 Wiesbaden 1(DE)

(54) Stitched servo pattern and method for positioning an optical-magnetic read/write head.

(57) A diskette comprising a jacket, a liner material disposed within said jacket, a flat circular media having a magnetic coating on both sides disposed within said liner material, a hub attached at the center of said media, a plurality of optical positioning tracks on at least one of said sides of said media that have stitched patterns that will wink on-and-off at twenty kilohetrz in the present of a constant, unmodulated light source.

Fig. 4

## BACKGROUND OF THE INVENTION

### 1. Field of the Invention

The invention relates generally to magnetic disk drives and more specifically to positioning optical-magnetic read/write heads in high track density drives and diskettes.

### 2. Description of the Prior Art

Continual advances in floppy disk technology have allowed the rapid migration from eight inch, to 5.25 inch to 3.5 inch diskettes. Originally, 5.25 inch diskettes held only 360K bytes of data, but higher track and more efficient recording formats have allowed the smaller 3.5 inch diskette to store as much as 1.44M bytes in the recent high density (HD) format. Such rapid migration has caused severe interoperability concerns, because of the physical incompatibility between the traditional formats. The recent HD format is a ray of hope that the situation will improve, in that both Apple Macintosh IIs and IBM-PCs equipped with HD drives record in basically an interchangeable format.

Advances in floppy disk technology have not stayed still. By embedding optical servo information in an otherwise standard 3.5 inch micro-floppy diskette, storage capacities of twenty megabytes and beyond are possible. The Micro Standards Committee, sponsored by the Microcomputer Managers Association, announced at COMDEX/Spring 1989 a 10-month study of proposed new formats to replace the aging 1.44M byte diskette. (See, "Draft White Paper on a New Standard for Very-High-Density Diskette Drives," February 5, 1990, published by the Micro Standards Committee, 50 W.34th St., Suite 23C7, New York, NY 10001.) The result was to recommend a 20.9M byte optical-magnetic format that was judged to be superior on every criterion rated.

Higher density disks have resulted from ever increasing track densities. The more concentric data tracks that can be packed into an area on a given disk size, the more data can be stored. But increasing track densities compound the problems in positioning a read/write head over the proper track. Stepper motors have been used in low track density drives to position the heads, but stepper motor positioning systems do not have the accuracy required for high track densities. Magnetic servo tracks embedded between data tracks or on a specialized surface in a multi-surface disk have also reached their limits. The prior art includes optical servo positioning methods that offer high track densities and good performance.

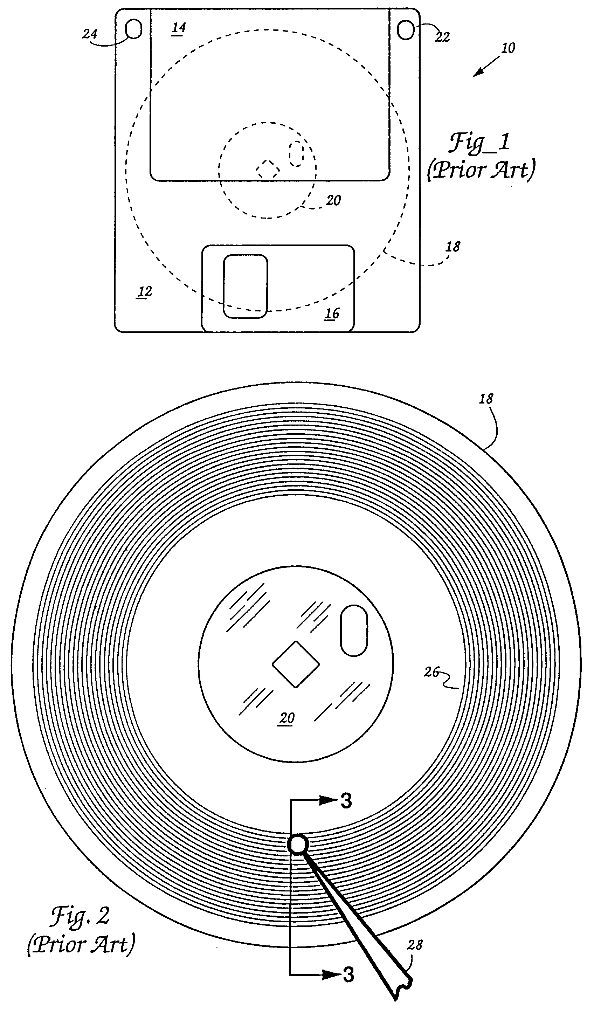

Fig. 1 is a prior art diskette, referred to by the general reference numeral 10, comprising a jacket 12, a label 14, a shutter 16, and a media 18. A liner is disposed within jacket 12 and is made of a material that lubricates and cleans media 18.

Fig. 2 is the prior art media of the diskette 10 of Fig. 1, shown without the jacket 12 and liner. Media 18 is typically coated with ferrite oxide. Media 18 comprises a plurality of concentric optically visible servo tracks 26. These optical servo tracks 26 are used to accurately position a read/write head assembly 28. Optical servo tracks 26 are embossed on media 18 by laser etching an unbroken concentric ring. The embossed areas (tracks 26) of media 18 will reflect less light that will the un-embossed areas.

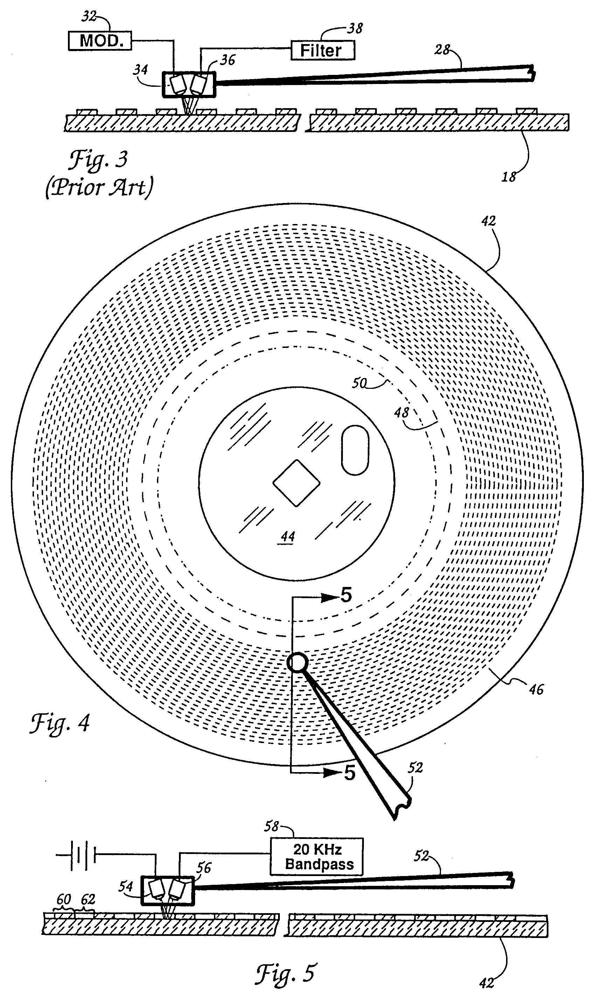

Fig. 3 is a cross-sectional view of the prior art media showing the vertical relief of a plurality of "valleys," caused by the above embossing, and a plurality of resulting "hills" that represent areas of un-embossed media. A modulator 32 comprises a frequency source, a mixer to combine the frequency source with automatic gain control (AGC) illumination level, a filter to eliminate harmonics and to generate a pure sine wave, and a DC restore circuit to control the baseline of the sinewave. Head assembly 28 comprises an LED 34 and a light detector 36 to pick up reflected light. A filter 38 removes unmodulated light detected by detector 36. Light from head assembly 28 is bounced off of media 18 and used to detect whether the head assembly 28 is positioned over a hill or over a valley, or somewhere in between. The signals are then processed by a front-end electronics sub-system. Media defects, dirt, and contamination on the surface of the media can create false position readings by the head. A large dynamic range is required by the front-end electronics sub-system to pass irrelevant reflected light without losing the information contained in the light reflected off of the media. The amount of irrelevant reflected light varies from drive to drive and from media to media. A calibration process must therefore be included in the drive to determine how much light is from the optical servo tracks and how much is not. This calibration degrades system performance, as it delays the availability of the diskette to a system. Prior art systems modulate the LED 34 to produce a modulated light that can be distinguished by the detector 36 from background light. But modulating the LED 34 current induces electrical and electromagnetic interference at a point very near the very sensitive magnetic head. The DC restore circuit in modulator 32 is used to control the amount of DC illumination generated by LED 34. DC illumination generates heat (from the LED 34), but provides no useful servo readback information. The amount of light that can be provided by LED 34 is limited by the total power that can be dissipated by the LED 34, whether that power is ultimately used to create useful information or not. The DC restore circuit guarantees highly efficient illumination by assuring a low amount of DC without clipping of the sine wave. The modulation of LED 34 (or any similar light source in the prior art) requires electrical shielding of LED 34 and its power supply lines. The shielding is necessary to reduce electromagnetic coupling into the magnetic head and its leads.

In general, the prior art requires modulated light sources to swing from zero to full amplitude at the modulating frequency (about twenty kilohertz). The peak levels are, in turn, modulated with a low frequency to adjust for track reflectivity variations in the media. The present invention, described below, requires the light source to vary only to follow reflectivity variations.

## SUMMARY OF THE PRESENT INVENTION

It is therefore an object of the present invention to provide a diskette media with a highly reliable positioning means that allows for very high density magnetic data storage.

Briefly, an embodiment of the present invention is a diskette comprising a jacket, a liner material disposed within said jacket, a flat circular media having a magnetic coating on both sides disposed within said liner material, a hub attached at the center of said media, a plurality of optical positioning tracks on at least one of said sides of said media that have stitched patterns that will wink on-and-off at twenty kilohertz in the presence of a constant, unmodulated light source.

An advantage of the present invention is that simplified circuits may be employed to drive the light sources in an optical-magnetic head.

Another advantage of the present invention is that no electromagnetic interference with the operation of a magnetic head will be caused by the light source or its lead wires.

Another advantage of the present invention is that a greater amount of light source power is used in the recovery of useful positioning information.

Another advantage of the present invention is that the positioning accuracy is improved and is less sensitive to particular common media defects and wear.

These and many other objects and advantages of the present invention will no doubt become obvious to those of ordinary skill in the art after having read the following detailed description of the preferred embodiments which are illustrated in the various drawing figures.

## IN THE DRAWINGS

Fig. 1 is an elevational view of a prior art diskette;

Fig. 2 is an elevational view of the media and hub inside the diskette of Fig. 1;

Fig. 3 is a cross-sectional view of the media and head assembly of Fig. 2, taken along the line 3-3;

Fig. 4 is an elevational view of a preferred embodiment of media of the present invention that is capable of replacing the media in the diskette of Fig. 1;

Fig. 5 is a cross-sectional view of the media and head assembly of Fig. 4, taken along the line 5-5; and

Fig. 6 is a highly magnified view of the head assembly of Fig. 4, and especially of the diamond-shaped detection area of the detector in the head. The detection area is shown in relation to a particular optical servo track at various points of displacement from the head assembly.

## DETAILED DESCRIPTION OF THE PREFERRED EMBODIMENTS

Fig. 4 illustrates a media 42 and a hub 44 of the present invention that overcomes the problems above and is assembled into a diskette assembly similar to diskette 10 (Fig. 1). The media 42 comprises a barium ferrite coating on both top and bottom surfaces (not shown for clarity in showing the other elements below), a plurality of concentric optical servo tracks 46, a media type code track 48, and a reference cylinder 50. Barium ferrite is preferred over ferric oxide for the coatings, because barium ferrite will support higher recording densities. The optical servo tracks 46 and reference cylinder 48 comprise a dashed pattern of reflective and non-reflective regions, rather than the continuously non-reflective tracks of the prior art (as is exemplified by media 18 in Fig. 2). Reference cylinder 48 provides a zero reference point for track zero calibration and track seeking among tracks 46. During the rotation of media 42 past a head assembly 52, the dashed patterns will appear to blink on and off (for example, at twenty kilohertz). At a preferred rotational speed of 720 revolutions per minute (RPM), the rate of blinking is low enough that simple detectors can separately resolve the light and dark regions. The dark areas of the optical servo tracks 46 are preferably embossed on media 42 by laser etching. The laser etching cuts small valleys, or grooves, that have rough floors that do not reflect light very well. All the un-embossed areas of media 42 will reflect light efficiently.

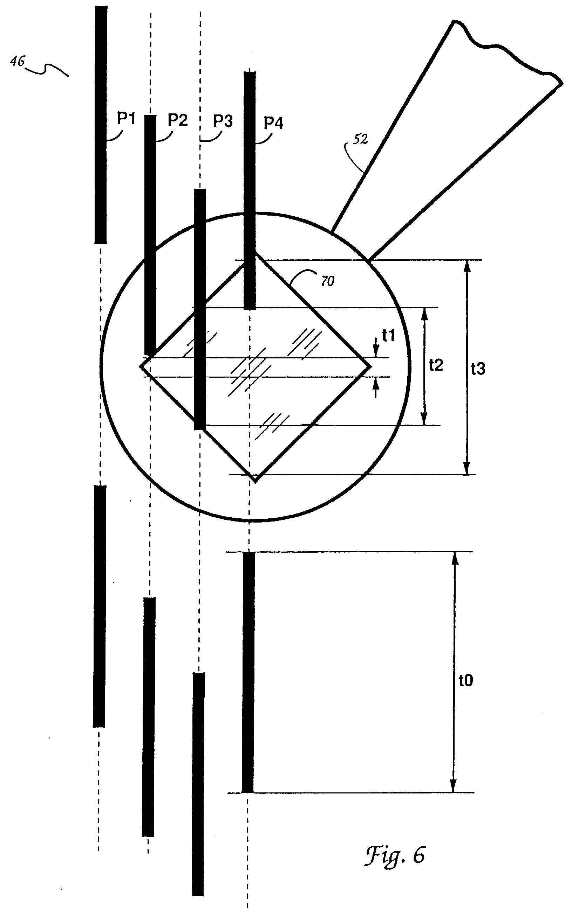

Fig. 5 illustrates that head assembly 52 carries a light source 54 and a light detector 56. A constant power source (e.g., a battery) drives light source 54. Light source 54 is preferably an LED, however, a fiber optic cable could be used to pipe light in from a bulkier source than an LED. A twenty kilohertz bandpass filter 58 removes background light and spurious reflections, such as those associated with common media defects. A plurality of hills 60 and valleys 62 are shown to exist on one side only of media 42. In a dual-head system, one where a head assembly 52 is on both the top and bottom sides of media 42, the optical servo tracks 46 being on one side will serve to position the heads on both sides by virtue of the usual practice of ganging the heads together on a common actuator arm. The detector 56 has a pulsed output when the tip of head assembly 52 is positioned over an optical servo track. Detector 56 has a diamond-shaped detection area (as described below for Fig. 6). Preferably, the dashed pattern of the optical servo tracks 46 is such that a 50% duty cycle (dashes substantially equal to the space between them) is detected at a frequency of twenty kilohertz. Background and other spurious light will have frequency components significantly apart from twenty kilohertz. Spurious light will be blocked by the bandpass filter 58. Light reflected from the un-embossed areas of media 42 produce frequency components primarily at the rotational speed of the media (720 RPM), which is twelve hertz, and also at the second harmonic of 24 Hz. A relatively simple bandpass filter 58 will give good results, due to the above degree of frequency separation. (The frequency separation described will be true for any rotational speed, not just 720 RPM.)

Fig. 6 illustrates a detection area 70 belonging to detector 56 relative to several potential positions of a particular track 46. These positions are labelled P1-P4. Each track 46 is comprised of embossed, non-reflective ring segments (shown as the dark verical line segments along P1-P4). Each non-reflective line segment in P1 will take a time "t0" to pass a single point under head assembly 52. But detection area 70 is diamond-shaped, and in position P2, and additional time "t1" is needed for the non-reflective line segments to pass leading edge to trailing edge in and out of detection area 70. Position P3 requires time "t2", which is longer than "t1". And in position P4, a maximum time "t3" will be added to "to". Therefore, when detection area 70 is centered over a particular optical servo track 46 (e.g., P4), the time it takes for a non-reflective dash, or "stitch" to pass its leading edge to its trailing edge under the diamond-shaped detection area will be maximum when the stitch passes squarely under the center of the detector. To either lateral edge of the detector, the leading edge of a stitch will enter the detection area later and the trailing edge will leave the detection area sooner. At the extreme edge, the duration is the time it takes a single point to travel the length of a single stitch. In practice, the duty cycle of the detector modulation will vary from 50% to zero. The amplitude of the twenty kilohertz signal from detector 56 will be maximum when the stitch passes squarely under the center of the detector, and will progressively decrease as the stitch passes closer to either edge. As the detector 56 moves away from the particular optical servo track 46, more light will be reflected by the media, but this increase in background light will be filtered away by the bandpass filter because it is essentially at DC frequency.

Track-to-track reflectivity variations in the optical servo tracks 46 will effect the signal amplitude, since they are modulated by the stitched pattern. Above, the magnetic area is 3.4 times larger than the track 46 area so burnish marks and wear marks are equally likely to occur in any area of the media 42. If the stitched pattern is created so that the magnetic performance of the non-reflective areas are significantly different than the reflective areas, unwanted modulation of the magnetic data may occur and degrade the data handling error rate of the system. This type of magnetic modulation is multiplicative modulation of the peak-to-peak amplitude of the magnetic data. Therefore, all frequencies present in the data are affected. The multiplication (also called heterodyning) introduces harmonics above and below each frequency contained in the magnetic data (sum-and-difference products). A 600 KHz magnetic data frequency will appear at both 580 KHz and 620 KHz, due to twenty kilohertz modulation. The third harmonic of twenty kilohertz will also produce 540 KHz and 660 KHz products. Typically, a readback signal will show a sudden increase in peak-to-peak amplitude at the trailing edge of a non-reflective area, and an equally sudden decrease in amplitude at the leading edge of a non-reflective area. This has the effect of shifting the detectable location of the magnetic data when the modulation occurs near the true peak. The prior art of modulating the light source creates an additive modulation, that injects the modulation frequency and not harmonics. The prior art appears to experience a baseline shift where magnetic information is added to the light source modulation. The effect of this modulation can be reduced by (1) maintaining the magnetic core over the magnetic data (un-embossed, reflective areas), and away from the optical servo tracks 46 (embossed, non-reflective areas); (2) providing the non-reflective parts in the optical servo track 46 area with the same magnetic performance as the reflective areas; and/or (3) providing a reflective region in the optical servo track 46 area that is as dead magnetically as the non-reflective areas.

Maintaining the magnetic core over the magnetic data in between the optical servo tracks 46 is effective when the magnetic width of the head is narrow enough that the head will not be affected by the pattern within the optical servo tracks 46. This is an undesirable restriction and is difficult to maintain, because it requires narrower track width heads and higher bandwidth servos. The present inventors are still investigating the second technique, above. Providing a reflective region in the optical servo track 46 area that is as dead magnetically as the non-reflective areas is practical and places no additional constraints on the magnetic head or servo over the prior art. Media 42 is preferably impressed, rather than ablated to create the non-reflective areas in optical servo tracks 46. The pattern of the impression is to depress the media throughout an individual optical servo track 46 so that it is magnetically dead to the magnetic head everywhere in the track. The light and dark pattern is achieved by the finish achieved in the depressed areas. A smooth finish in the depressed areas will create a reflective area. A pitted finish will create a non-reflective area. The optical appearance of the smooth depressed area includes a dark band at either radial edge of the servo track 46, since the surface height will be changing in these areas and will scatter light. The width of individual optical servo tracks 46 is reduced in order to gain in the tradeoff with reduced magnetic modulation. Even though the cost of narrow optical servo tracks 46 is reduced modulation of the light produced by LED 54, the amount of reduced magnetic modulation to be realized is worth the price. By depressing the entire concentric ring area of each optical servo track 46, scratches are less likely to occur. This extends medias 42 life and helps with servo tracking accuracy. If the stitched pattern were to be achieved by depressing the non-reflective areas and not by depressing the reflective areas, material (e.g., barium oxide coating) may be pulled out of the media 42 at the trailing edge of the non-reflective areas, which would cause a circumferential reflectivity change in a particular optical servo track 46.

Although the present invention has been described in terms of the presently preferred embodiments, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. An optical-magnetic head positioning system, comprising:

   a diskette media having optical servo tracks that comprise a plurality of concentric rings consisting of a regular pattern of substantially equal length reflective and non-reflective ring segments; and

   means to detect said optical servo tracks comprising a light source, a light detector having a diamond-shaped detection area in contact with the diskette media, and a bandpass filter.

2. The system of claim 1, wherein:

   said reflective and non-reflective ring segments are magnetically inactive and are narrower than a plurality of magnetically active areas between adjacent concentric rings.

3. The system of claim 1, wherein:

   said light source is substantially free of any modulation above one hundred hertz.

4. An optical-magnetic diskette having a jacket, a hub, and a magnetically-coated media, the diskette capable of recording and reading by an optical-magnetic disk drive having means to detect said optical servo tracks comprising a light source, a light detector having a diamond-shaped detection area in contact with the diskette media, the magnetically-coated media comprising:

   a plurality of optical servo tracks concentrically positioned on a surface of said media and consisting of a visible pattern of regular and substantially equal length reflective and non-reflective ring segments.

5. The system of claim 4, wherein:

   said reflective and non-reflective ring segments are magnetically inactive and are narrower than a plurality of magnetically active areas between adjacent concentric rings.

6. A method of positioning an optical-magnetic head in a disk drive, comprising the steps of:

   defining a rotational speed of a diskette media in contact with the disk drive;

defining a plurality of concentric servo tracks on a surface of said media;

defining a fundamental servo frequency;

embossing and not embossing at each optical servo track location a pattern on said surface of said media that blinks on-and-off at said fundamental servo frequency in relation to a stationary single point of contact with the respective optical servo track when said media is rotating at said defined rotational speed;

locating the optical-magnetic head proximate to one of said optical servo tracks;

adjusting said location of the optical-magnetic head based on the duty cycle and amplitude of a signal at the fundamental servo frequency detected by optical servo track detection means.

7. The method of claim 6, wherein:

the rotational speed is defined to be 720 revolutions per minute.

8. The method of claim 6, wherein:

the fundamental servo frequency is defined to be twenty kilohertz.

9. The method of claim 6, wherein:

the embossing is accomplished by laser etching said surface of said media.

*Fig_1*
*(Prior Art)*

*Fig. 2*
*(Prior Art)*

Fig. 3
(Prior Art)

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 347 744 (N.V. PHILIPS' GLOEILAMPENFABRIEKEN) <br> * page 1, line 4 - line 9 * <br> * page 2, line 9 - line 25 * <br> * page 3, line 4 - line 19 * <br> * page 5, line 14 - line 26 * <br> * figure 1B * | 1,2,4-6, 9 | G11B5/596 <br> G11B21/08 <br> G11B7/13 <br> G11B5/55 <br> G11B21/10 |
| A | EP-A-0 130 495 (INTERNATIONAL BUSINESS MACHINES CORPORATION) <br> * page 5, line 19 - page 6, line 28 * <br> * page 9, line 33 - line 36; figure 2 * | 1,4,6 | |
| | | | **TECHNICAL FIELDS SEARCHED (Int. Cl.5 )** <br><br> G11B |

The present search report has been drawn up for all claims

| Place of search | Date of completion of the search | Examiner |
|---|---|---|
| BERLIN | 18 FEBRUARY 1992 | CHAUMERON B. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)